# EUROPÄISCHE PATENTSCHRIFT

(11) **EP 4 136 937 B1**
(45) Veröffentlichungstag und Bekanntmachung des Hinweises auf die Patenterteilung: **27.08.2025**
(21) Anmeldenummer: 21728472.8
(22) Anmeldetag: 18.05.2021
(51) Int. Cl.: H05B 3/48, H05B 3/06, H01C 1/016, H01C 1/03, B60L 7/02, H01C 1/08

(54) **BREMSWIDERSTAND UND DAMIT AUSGESTATTETES FAHRZEUG**
BRAKING RESISTOR AND VEHICLE EQUIPPED WITH SAME
RÉSISTANCE DE FREINAGE ET VÉHICULE ÉQUIPÉ DE CELLE-CI

(30) Priorität: 18.06.2020 DE 102020207565
(43) Veröffentlichungstag der Anmeldung: 22.02.2023
(73) Patentinhaber: Siemens Mobility GmbH, 81739 München (DE)
(72) Erfinder: BLISSE, Johannes, 91080 Spardorf (DE); DORNBERGER, Peter, 90489 Nürnberg (DE)
(74) Vertreter: Siemens Patent Attorneys
(86) Internationale Anmeldenummer: PCT/EP2021/063115
(87) Internationale Veröffentlichungsnummer: WO 2021/254708

(56) Entgegenhaltungen:
- WO-A1-2020/083620
- US-A- 3 934 333

## Beschreibung

Die Erfindung bezieht sich auf einen Bremswiderstand für ein mit einer elektrodynamischen Bremseinrichtung ausgestattetes Fahrzeug, insbesondere Schienenfahrzeug, sowie auf ein Fahrzeug, das mit einem solchen Bremswiderstand ausgerüstet ist.

Ein bekannter Bremswiderstand geht beispielsweise aus der DE 10 2017 207 274 B3 hervor. Der dort beschriebene Bremswiderstand ist an einem Schienenfahrzeug eingesetzt, in dessen Dachbereich untergebracht und wird dauerhaft von Fahrtwind umströmt, um den Bremswiderstand abzukühlen. Hintergrund dessen ist es, dass im Bremsfall der Bremswiderstand mit Strom aus der elektrodynamischen Bremse des Fahrzeugs beaufschlagt wird. Dieser Strom führt zur Erwärmung des Bremswiderstands, so dass eine nachfolgende Entwärmung erforderlich ist.

Bei der Entwärmung durch Fahrtwind ergibt sich das Problem, dass nicht alle Oberflächen des Bremswiderstandes im selben Maße abgekühlt werden, da manche Oberflächenabschnitte des Bremswiderstandes für den kühlenden Fahrtwind leichter zugänglich sind als andere. Dies kann thermisch verursachte Verformungen/Bewegungen des Bremswiderstands nach sich ziehen.

Aus der WO 2020/083620 A1 ist ein gattungsgemäßer Bremswiderstand bekannt.

Ausgehend hiervon liegt der Erfindung die Aufgabe zugrunde, den Bremswiderstand der eingangs genannten Art derart weiterzuentwickeln, dass er auch bei über den Bremswiderstand variierenden thermischen Bedingungen sicher einsetzbar ist.

Diese Aufgabe wird gelöst durch einen Bremswiderstand mit den Merkmalen des Anspruchs 1 sowie durch ein Fahrzeug nach Anspruch 6.

Die Aufgabe wird hinsichtlich des Bremswiderstands dadurch gelöst, dass der Bremswiderstand eine Mehrzahl von langgestreckten, zylinderförmigen und parallel zueinander auf wenigstens einem Loslager-Träger abgestützten Heizpatronen aufweist, wobei die Heizpatronen mittels einer Lageranordnung gehalten sind, die Loslager umfasst, welche an dem Loslager-Träger befestigt sind.

Der Einsatz von Loslagern zur jeweiligen Befestigung der Heizpatronen gestattet es, etwaigen thermischen Längenausdehnungen der Heizpatronen Rechnung zu tragen. Insbesondere ist es möglich, die Mehrzahl von Heizpatronen an geeigneter Stelle in Querrichtung ihrer Längserstreckung mittels eines geeigneten Festlagers zu montieren, während von dem Festlager entfernte Abschnitte der Heizpatronen mittels der hier vorgestellten Loslager in Querrichtung der Heizpatronen in ihrer Lage gehalten werden.

Die Heizpatronen können insbesondere einen äußeren Metallmantel aufweisen, welcher mit einem verdichteten Keramikpulver und einem innerhalb des Keramikpulvers längs der zugeordneten Heizpatrone verlaufenden Heizdraht befüllt ist, wobei an Enden der Heizpatronen jeweils elektrische Anschlüsse für den Heizdraht angebracht sind. Es ergibt sich somit eine Heizpatrone, mit der sich ein Bremswiderstand in einfacher Weise aufbauen lässt, wobei eine für die Anforderungen des Bremswiderstandes erforderliche Anzahl von Heizpatronen vorzusehen ist.

Die Loslager können jeweils eine Loslager-Haltelasche aufweisen, die an einem Loslager-Trägerabschnitt befestigt ist, wobei die Loslager-Trägerabschnitte jeweils entlang einer der Heizpatronen verlaufen. Dabei wird unter einem "Loslager-Trägerabschnitt" ein vorzugsweise streifenförmiger Abschnitt des Loslager-Trägers verstanden, an dem ggf. unter Zwischenlage einer Dämmplatte die zugeordnete Loslager-Haltelasche befestigt ist.

Vorteilhafterweise sind die Loslager-Haltelaschen jeweils aus einem einer Heizpatrone zugeordneten, elastischen Einklipsabschnitt sowie einem sich an dem Einklipsabschnitt anschließenden Befestigungsabschnitt aufgebaut, wobei der Befestigungsabschnitt auf dem Loslager-Träger befestigt ist. Aufgrund der Elastizität des Einklipsabschnitts ist es möglich, auch Heizpatronen variierenden Durchmessers mit Hilfe derselben Loslager zu halten. Des Weiteren ist es möglich, dass die Heizpatronen aufgrund thermischer Ausdehnung innerhalb des Einklipsabschnitts in ihrer Längsrichtung eine Gleitbewegung relativ zur Haltelasche und auch dem Loslager-Träger vollführen.

Die Loslager-Haltelaschen sind bevorzugt aus jeweils einem streifenförmigen Blechbiegeteil (bei Großer Stückzahl aus Spaltband (schmale Blechcoils), bei geringerer Stückzahl aus Blechplatten) durch Umformen hergestellt, wobei der Einklipsabschnitt einen im Wesentlichen kreissegmentförmigen Querschnitt aufweist und an seiner dem Befestigungsabschnitt gegenüberliegenden Seite zur Aufnahme einer Heizpatrone offen ist. Dabei schließt sich der Befestigungsabschnitt an den Einklipsabschnitt an, wobei eine dem Einklipsabschnitt gegenüberliegende, flache Seite des Befestigungsabschnitts auf den Loslager-Trägerabschnitt gelegt werden kann. Nach geeigneter Positionierung der Loslager-Haltelaschen können diese beispielsweise durch Nieten mit ihren zugeordneten Loslager-Trägerabschnitten fest verbunden werden.

Es ist erfindungsgemäß vorgesehen, dass Loslager, die einander unmittelbar benachbarten Heizpatronen zugeordnet sind, entlang den Heizpatronen zueinander versetzt angeordnet sind. Dies gestattet eine platzsparende Anordnung der Heizpatrone insgesamt.

Die oben angegebene Aufgabe wird hinsichtlich des Fahrzeugs gelöst durch ein Fahrzeug mit einer elektrodynamischen Bremseinrichtung und einem Bremswiderstand der vorstehend erläuterten Art. Bei dem Fahrzeug kann es sich insbesondere um ein Schienenfahrzeug handeln, wobei dort ein Bremswiderstand typischer Weise auf einem Fahrzeugdach untergebracht sein kann.

Ein Ausführungsbeispiel der Erfindung wird nachfolgend unter Bezugnahme auf die Zeichnung noch näher erläutert. Es zeigen:
- Figur 1: eine Seitenansicht einer Heizpatrone zum Einsatz bei einem Bremswiderstand,
- Figur 2: eine Querschnittsansicht der Heizpatrone von Figur 1,
- Figur 3: eine Seitenansicht einer Lageranordnung für Heizpatronen nach Figur 1,
- Figur 4: eine perspektivische Ansicht einer Loslager-Haltelasche der Lageranordnung von Figur 3,
- Figur 5: eine schematische Draufsicht der Lageranordnung von Figur 3 mit eingebauten Heizpatronen,
- Figur 6: eine perspektivische Ansicht eines Bremswiderstands, ausgestattet mit Heizpatronen nach Figur 1, mit abgenommener Verkleidung.

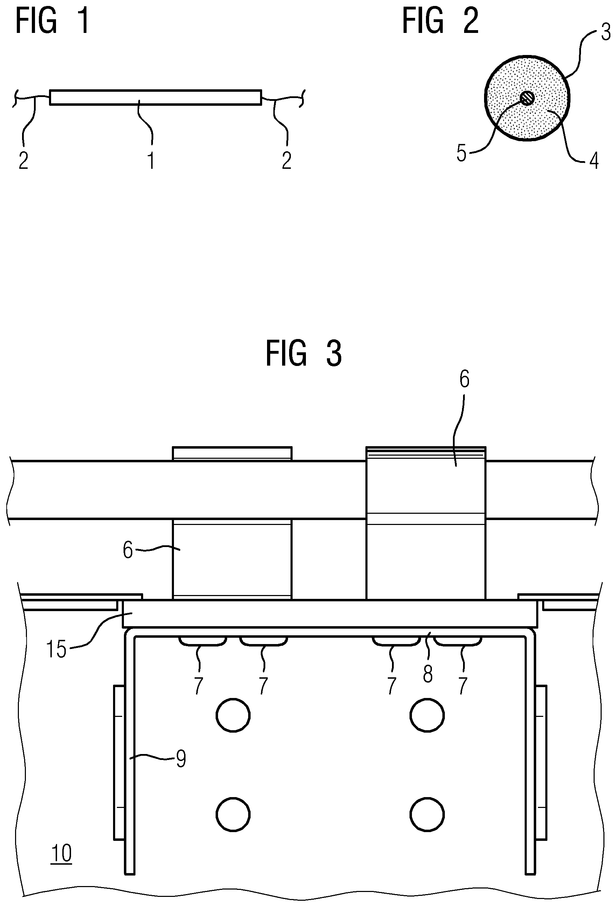

Ein wesentliches Element des hier beschriebenen Bremswidersandes für ein mit einer elektrodynamischen Bremseinrichtung ausgestattetes Fahrzeug, insbesondere Schienenfahrzeug, ist in den Figuren 1 und 2 dargestellt. Dabei handelt es sich um eine Heizpatrone 1, die eine langgestreckte, zylinder- oder auch stabförmige äußere Form aufweist. Die Heizpatrone 1 ist an ihren beiden Stirnseiten jeweils mit elektrischen Anschlüssen 2 ausgestattet. Wie aus Figur 2 hervorgeht, besitzt die Heizpatrone 1 einen äußeren Metallmantel 3, der mit einem hochverdichteten Keramikpulver 4 und einem hochtemperaturbeständigen Heizdraht 5 befüllt ist, wobei der Heizdraht 5 in der Heizpatrone 1 zentral angeordnet ist.

Eine Mehrzahl, parallel zueinander angeordneter Heizpatronen 1 bildet einen Bremswiderstand aus, wobei im Bremsfall die Heizpatronen 1 mit Strom aus einer elektrodynamischen Bremse eines Fahrzeugs beaufschlagt werden. Dieser elektrische Strom führt zu einer Erwärmung der Heizpatronen **1.** Die Heizpatronen 1 werden während dessen durch den Fahrtwind abgekühlt. Da die Wärmeabfuhr an der direkt umströmten Oberfläche der Heizpatrone 1 größer ist als an anderen Oberflächen der Heizpatrone **1,** kühlt diese an der direkt umströmten Oberfläche beschleunigt ab und die Temperatur variiert zwischen Röhrenober- und -unterseite. Anhand der unterschiedlichen thermischen Dehnung der Heizpatronenoberfläche besteht die Gefahr, dass diese sich deformiert (durchbiegt) oder auch verdreht.

Figur 3 zeigt einen Ausschnitt einer Lageranordnung für mit der Heizpatrone 1 baugleiche Heizpatronen. Es ist ersichtlich, dass zur Realisierung von Loslagern für die Heizpatronen 1 Haltelaschen 6 vorgesehen sind, welche wiederum mittels Nieten 7 an zugeordneten Loslager-Trägerabschnitten 8 befestigt sind. Dabei liegen die Loslager-Haltelaschen 6 unter Zwischenlage von Dämmplatten 15 auf den Loslager-Trägerabschnitten 8 auf, welche wiederum auf einem in Querrichtung der Heizpatronen 1 verlaufenden Loslager-Träger 9 abgestützt sind. Dabei erstrecken sich die Nieten 7 sowohl durch die Oberseite des Loslager-Trägers als auch durch die jeweils zugeordneten Loslager-Trägerabschnitte 8.

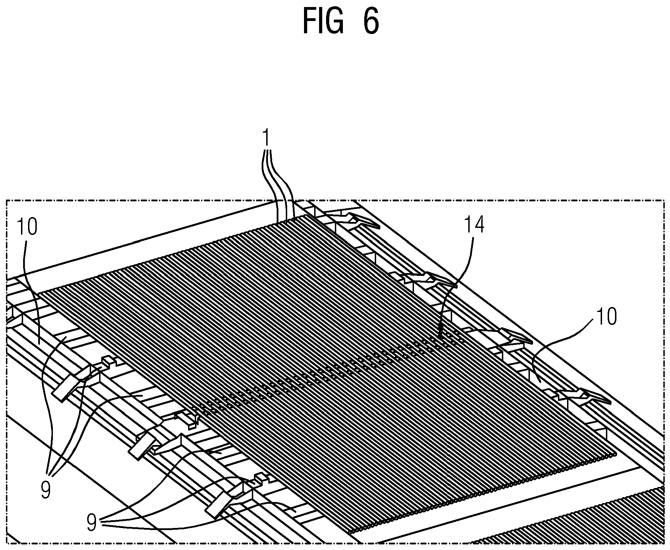

Der schienenförmig beziehungsweise u-förmig ausgebildete Loslagerträger 9 ist zwischen zwei seitlich des Bremswiderstands gelegenen Auflager-Trägern 10 fest verspannt (vgl. Figur 6). Die Auflager-Träger 10 erstrecken sich parallel zu den Heizpatronen 1.

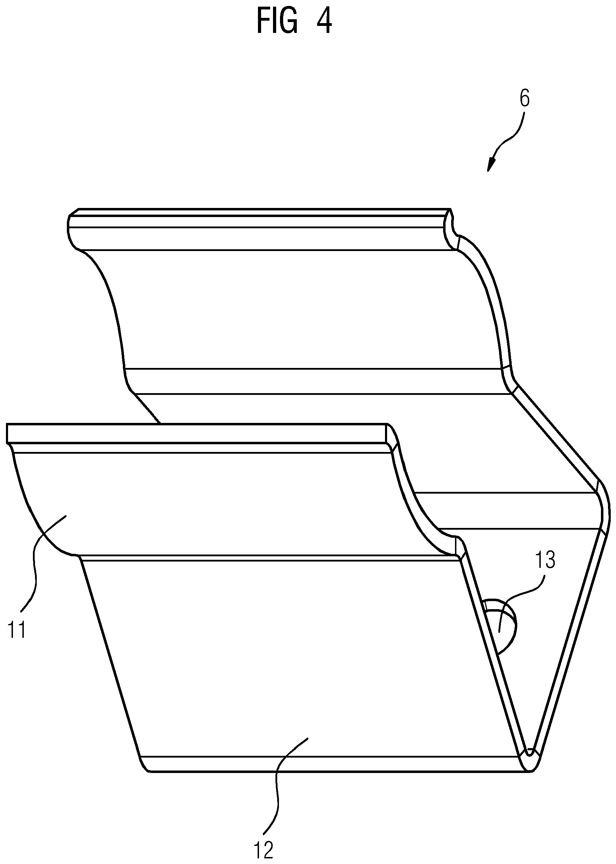

Aus Figur 4 geht die äußere Form einer Haltelasche 6 mehr im Detail hervor. Ein der Heizpatrone 1 zugeordneter, oberer Einklipsabschnitt 11 der Haltelasche 6 weist einen kreissegmentförmigen Querschnitt auf, wobei freie Enden des Einklipsabschnitts 11 nach außen gekrümmt sind, um das Einsetzen der Heizpatrone 1 in den Einklipsabschnitt 11 zu erleichtern. Ein unterer Befestigungsabschnitt 12 der Haltelasche 6 weist eine flache, dem zugeordneten Loslager-Trägerabschnitt 8 zugewandte Seite mit zwei Durchgangsbohrungen 13 auf, um die Befestigung der Haltelasche 6 mittels Nieten zu ermöglichen.

Die Haltelasche 6 ist aus einem elastischen, umgeformten, streifenförmigen Blechbiegeteil hergestellt und kann somit dünnwandig ausgebildet werden. Aufgrund der Elastizität der Haltelasche 6 ist es möglich, mit Hilfe desselben Einklipsabschnitts 11 Heizpatronen verschiedener Durchmesser sicher zu halten.

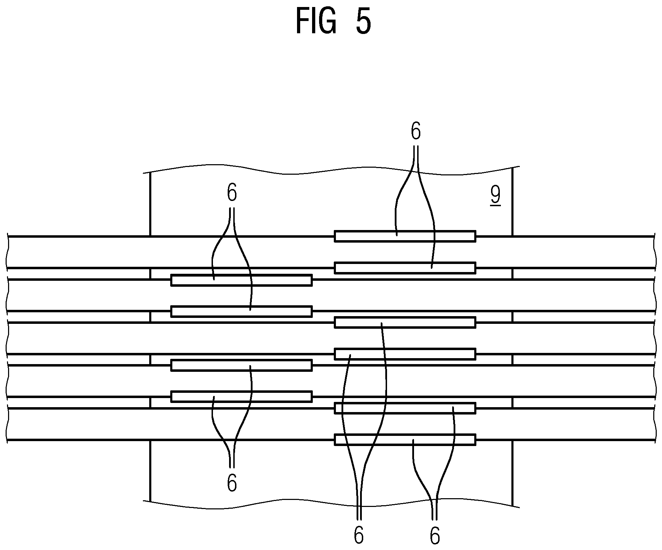

Aus Figur 5 geht hervor, dass die Heizpatronen 1 in engem Abstand zueinander gelagert sind, wobei die Haltlaschen 6 bei einander unmittelbar benachbarten Heizpatronen 1 in Längsrichtung der Heizpatronen 1 versetzt zueinander angeordnet sind. Im Ausführungsbeispiel der Figur 5 ergeben sich für ein betreffendes Loslager 2 in Längsrichtung der Heizpatronen 1 zwei zueinander versetzte Reihen von Haltelaschen 6.

Aus Figur 6 wird ersichtlich, wie sich eine mögliche Gesamtgestaltung des einlagigen Bremswiderstands darstellt. Der Bremswiderstand ist in Figur 6 auf einem Dach eines Schienenfahrzeugs angeordnet, wobei eine Verkleidung fortgelassen ist. Die Lagerung der Heizpatronen 1 umfasst ein zentral gelegenes Festlager 14 und im dargestellten Ausführungsbeispiel sechs Loslager, deren Position anhand der Lage der Loslager-Träger 9 erkennbar ist (die Bemessung der Haltelaschen 6 ist zu klein, als dass diese in Figur 6 darstellbar wären). Die insgesamt sechs Loslager gewährleisten, dass sämtliche Heizpatronen 1 an mehreren Punkten lose gehalten sind. Dies soll zu starke Deformationen sowie auch ein Schwingen der Heitpatronen 1 verhindern. Aufgrund der Dünnwandigkeit der Haltelaschen 6 besitzen sie einen geringen Strömungswiderstand. Zudem dienen sie zur Abfuhr von Wärme, die bei einem Stromdurchfluss der Heizpatronen 1 erzeugt wird. Bei thermischer Belastung der Heizpatronen 1 behalten deren zentrale Abschnitte im Bereich des Festlagers 14 ihre Position, während entfernt davon gelegene Abschnitte der Heizpatronen 1 in den Einklipsabschnitten 11 der Haltelaschen 6 verschieblich sind.

## Patentansprüche

1. Bremswiderstand für einen mit einer elektrodynamischen Bremseinrichtung ausgestattetes Fahrzeug,
wobei
der Bremswiderstand eine Mehrzahl von langgestreckten, zylinderförmigen und parallel zueinander auf wenigstens einem Loslager-Träger (9) abgestützten Heizpatronen (1) aufweist, wobei die Heizpatronen (1) mittels einer Lageranordnung gehalten sind, die Loslager umfasst, welche an dem Loslager-Träger (9) befestigt sind, **dadurch gekennzeichnet, dass** Loslager, die einander unmittelbar benachbarten Heizpatronen (1) zugeordnet sind, entlang den Heizpatronen (1) zueinander versetzt angeordnet sind.

2. Bremswiderstand nach Anspruch 1,
**dadurch gekennzeichnet, dass**
die Heizpatronen (1) einen äußeren Metallmantel (3) aufweisen, welcher mit einem verdichteten Keramikpulver (4) und einem innerhalb des Keramikpulvers (4) längs der zugeordneten Heizpatrone (1) verlaufenden Heizdraht (5) befüllt ist, wobei an Enden der Heizpatronen (1) jeweils elektrische Anschlüsse (2) für den Heizdraht (1) angebracht sind.

3. Bremswiderstand nach Anspruch 1 oder 2,
**dadurch gekennzeichnet, dass**
die Loslager jeweils eine Loslager-Haltelasche (6), die an einem Loslager-Trägerabschnitt (8) befestigt ist, aufweisen, wobei die Loslager-Trägerabschnitte (8) jeweils entlang einer der Heizpatronen (1) verlaufen.

4. Bremswiderstand nach Anspruch 3,
**dadurch gekennzeichnet, dass**
die Loslager-Haltelaschen (6) jeweils einen der Heizpatrone (1) zugeordneten, elastischen Einklipsabschnitt (11) sowie einen sich an den Einklipsabschnitt (11) anschließenden Befestigungsabschnitt (12) aufweisen, welcher auf dem Loslager-Trägerabschnitt (8) befestigt ist.

5. Bremswiderstand nach einem der Ansprüche 1 bis 4,
**dadurch gekennzeichnet, dass**
die Loslager-Haltelaschen (6) aus jeweils einem streifenförmigen Blechbiegeteil durch Umformen hergestellt sind, wobei der Einklipsabschnitt (11) einen im Wesentlichen kreissegmentförmigen Querschnitt aufweist und an seiner dem Befestigungsabschnitt (12) gegenüberliegenden Seite zur Aufnahme einer Heizpatrone offen ist.

6. Fahrzeug mit einer elektrodynamischen Bremseinrichtung und einem Bremswiderstand nach einem der Ansprüche 1 bis 5.

7. Fahrzeug nach Anspruch 6, ausgebildet als Schienenfahrzeug.

## Claims

1. Braking resistor for a vehicle equipped with an electrodynamic braking facility,
wherein
the braking resistor has a plurality of heating cartridges (1) that are elongated, cylindrical and supported in parallel with one another on at least one floating bearing carrier (9), wherein the heating cartridges (1) are held by means of a bearing arrangement, which comprises floating bearings that are fastened to the floating bearing carrier (9), **characterised in that** floating bearings that are assigned to heating cartridges (1) immediately adjacent to one another are arranged offset from one another along the heating cartridges (1).

2. Braking resistor according to claim 1,
**characterised in that**
the heating cartridges (1) have an outer metal sheath (3), which is filled with a condensed ceramic powder (4) and a heating wire (5) that runs along the assigned heating cartridge (1) within the ceramic powder (4), wherein electrical terminals (2) for the heating wire (1) are attached at each of the ends of the heating cartridges (1).

3. Braking resistor according to claim 1 or 2,
**characterised in that**
the floating bearings each have a floating bearing holding tab (6), which is fastened to a floating bearing carrier section (8), wherein the floating bearing carrier sections (8) each run along one of the heating cartridges (1).

4. Braking resistor according to claim 3,
**characterised in that**
the floating bearing holding tabs (6) each have an elastic clip-on section (11) assigned to one of the heating cartridges (1) as well as a fastening section (12) adjoining the clip-on section (11), which is fastened to the floating bearing carrier section (8).

5. Braking resistor according to one of claims 1 to 4,
**characterised in that**
the floating bearing holding tabs (6) are produced from a strip-shaped bent sheet metal part by reforming in each case, wherein the clip-on section (11) has a cross-section that is substantially in the shape of a segment of a circle and is open for receiving a heating cartridge on its side lying opposite the fastening section (12).

6. Vehicle with an electrodynamic braking facility and a braking resistor according to one of claims 1 to 5.

7. Vehicle according to claim 6, embodied as a rail vehicle.

## Revendications

1. Résistance de freinage d'un véhicule équipé d'un dispositif électrodynamique de freinage,
dans laquelle
la résistance de freinage a une pluralité de cartouches (1) de chauffage oblongues de forme cylindrique et appuyées parallèlement entre elles sur au moins un support (9) à palier libre, dans laquelle les cartouches (1) de chauffage sont maintenues au moyen d'un agencement de palier, qui comprend des paliers libres, lesquels sont fixés au support (9) à palier libre, **caractérisée en ce que** des paliers libres, qui sont associés à des cartouches (1) de chauffage directement voisines les unes des autres, sont disposés de manière décalée les uns par rapport aux autres le long des cartouches (1) de chauffage.

2. Résistance de freinage suivant la revendication 1,
**caractérisée en ce que**
les cartouches (1) de chauffage ont une enveloppe (3) métallique extérieure, qui est remplie d'une poudre (4) céramique comprimée et d'un fil (5) de chauffage s'étendant à l'intérieur de la poudre (4) céramique le long de la cartouche (1) de chauffage associée, dans laquelle des bornes (2) électriques pour le fil (1) de chauffage sont disposées respectivement aux extrémités des cartouches (1) de chauffage.

3. Résistance de freinage suivant la revendication 1 ou 2,
**caractérisée en ce que**
les paliers libres ont respectivement une patte (6) de maintien de palier libre, qui est fixée à une partie (8) de support de palier libre, dans laquelle les parties (8) de support de palier libre s'étendent respectivement le long de l'une des cartouches (1) de chauffage.

4. Résistance de freinage suivant la revendication 3,
**caractérisée en ce que**
les pattes (6) de maintien de palier libre ont respectivement une partie (11) élastique de clipsage associée à la cartouche (1) de chauffage ainsi que, se raccordant à la partie (11) de clipsage, une partie (12) de fixation, qui est fixée à la partie (8) de support de palier libre.

5. Résistance de freinage suivant l'une des revendications 1 à 4,
**caractérisée en ce que**
les pattes (6) de maintien de palier libre sont fabriquées par déformation en respectivement une partie cintrée de tôle en forme de bande, dans laquelle la partie (11) de clipsage a une section transversale sensiblement en forme de segment de cercle et est, pour la réception d'une cartouche de chauffage, ouverte sur son côté opposé à la partie (12) de fixation.

6. Véhicule ayant un dispositif électrodynamique de freinage et une résistance de freinage suivant l'une des revendications 1 à 5.

7. Véhicule suivant la revendication 6, constitué sous la forme d'un véhicule ferroviaire.
